# EUROPEAN PATENT APPLICATION

(11) **EP 4 800 617 A1**
(43) Date of publication of application: **02.09.2026**
(21) Application number: 26156292.0
(22) Date of filing: 04.02.2026
(51) Int. Cl.: G06Q 10/0631

(54) **LOAD BALANCING AND DISTRIBUTING ISSUE REQUESTS FOR RESOLUTION BY ASSIGNABLE RESOURCES**

(30) Priority: 28.02.2025 US 202519066349
(71) Applicant: Microsoft Technology Licensing, LLC, Redmond, WA 98052 (US)
(72) Inventor: DAOUPHARS, Julien, Redmond, 98052 (US); MOORE, Josh Charles, Redmond, 98052 (US); NAG, Amitabh, Redmond, 98052 (US); VELUSWAMI, Senthilkumar, Redmond, 98052 (US); LIN, Zhenfeng, Redmond, 98052 (US); PATEL, Rachit Narendrakumar, Redmond, 98052 (US)
(74) Representative: CMS Cameron McKenna Nabarro Olswang LLP

(57) **Abstract**

Load balancing and distributing issue requests for resolution by assignable resources is described. A multimodal model determines attributes of an input issue request. A lower dimensional representation of the input issue request is generated based on the attributes; and compared to other lower dimensional representations of other issue requests to identify prior similar issue requests. The multi modal model outputs indications of similarity strength for the prior similar issue requests, and the resources assigned to resolve the prior similar issue requests. An expertise level for each assignable resource is determined based on the similarity strength and the previously assigned resources. A routing metric for each assignable resource is determined based on a combination of the expertise level and an availability of each assignable resource; and the input issue request is routed to an assignable resource in the assignable resources based on the routing metric.

## Description

### BACKGROUND

This disclosure relates to load balancing and distributing issue requests for resolution by assignable resources.

Technology support (e.g., a help desk or similar) is available for various hardware, software, and other systems. For example, users can chat with, email, or call technology support resources about any number of issues related to a given hardware or software product. When an issue is identified, a request for resolution in the form of a support ticket may be generated. Technology help desk support often relies on support ticket software systems that utilize a schedule model, where one or more designated responsible individuals or teams are assigned as a primary help desk resource during a certain time window (so that any support tickets that result from chats, emails, or calls that come in during that time window are routed to the assigned resource). Sometimes these support ticket software systems utilize a central queue, with a first in first out method for assigning ticket ownership and driving resolution.

### SUMMARY

Unlike prior schedule model or central queue based techniques, the present systems and methods are configured to consider the similarity of an issue request (e.g., in the form of a support ticket) to other prior issue requests, and route the issue request to a resource (e.g., a designated responsible individual or team) with matching expertise and availability for resolution. Among other advantages, this significantly increases the likelihood of quickly resolving the issue request compared to prior techniques.

Some embodiments include a method for load balancing and distributing issue requests for resolution by assignable resources. The method comprises determining, with a multimodal model, attributes of an input issue request. The attributes comprise entities and context associated with the input issue request. The multimodal model is configured to generate a lower dimensional representation of the input issue request based on the attributes. The multimodal model is configured to compare the lower dimensional representation to other lower dimensional representations of other issue requests to identify prior similar issue requests. The multimodal model outputs indications of similarity strength for the prior similar issue requests relative to the input issue request determined based on the comparing, and indications of resources assigned to resolve the prior similar issue requests. Expertise levels for the assignable resources are determined based on the indications of similarity strength and the indications of resources assigned to resolve the prior similar issue requests. Routing metrics are determined for the assignable resources based on a combination of the expertise levels and availabilities of the assignable resources. The input issue request is routed to an assignable resource in the assignable resources based on the routing metrics.

In some embodiments, the multimodal model is a large language model (LLM). The LLM may be a generative pre-trained transformer (GPT), for example. The LLM is trained on a historical set of issue request routing and completion data. The data comprises the other issue requests, attributes of the other issue requests, the other lower dimensional representations of the other issue requests, resources assigned to each of the other issue requests, and an indication of whether the other issue requests were successfully resolved, or other information.

In some embodiments, generating the lower dimensional representation comprises encoding the attributes of the input issue request into a vector that represents the lower dimensional representation. The lower dimensional representation of the input issue request and the other lower dimensional representations of other issue requests may be vectors, for example. The indications of similarity strength comprise cosine distances between vectors.

In some embodiments, the entities and context comprise signals associated with the input issue request. The entities comprise tokens associated with at least one of specific, identifiable items or concepts that have meaning within the input issue request. For example, the entities may comprise one or more of: identification or incident numbers, a title of the input issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, an issue request creation mechanism, or other entities. The context may comprise tokens associated with at least one of surrounding information, background, or situational factors present in the input issue request that influence generating the lower dimensional representation of the input issue request. The context may comprise tokens indicative of one or more of symptoms associated with the input issue request, relationships between entities in the input issue request, hierarchical relationships associated with the input issue request, or other tokens.

In some embodiments, the assignable resources comprise designated responsible individuals or teams of individuals. Determining the expertise level for each assignable resource comprises determining whether the assignable resources successfully resolved a prior similar issue request. The availability of each assignable resource is determined based on one or both of: a total number of issue requests assigned to each assignable resource, and a total time spent on a particular issue request by each assignable resource.

In some embodiments, the input issue request comprises a ticket. The ticket comprises a structured record configured to track, manage, or document a specific issue, task, request, or interaction between a requestor and the assignable resources, for example.

In some embodiments, routing the input issue request to the assignable resource in the assignable resources based on the routing metric comprises prioritizing distribution of the input issue request to a designated responsible individual or team of individuals who has already been assigned or resolved one or more prior similar issue requests, and who has sufficient availability.

In some embodiments, the method includes monitoring for a new issue request generation or new issue request transfer to a given resolution resource, and invoking the method responsive to new issue request generation or the transfer to the given resolution resource.

In some embodiments, the method comprises cleaning text of the input issue request prior to attribute determination by the multimodal model. The cleaning comprises removing noise from the input issue request. The noise comprises injected input not specific to an issue associated with the input issue request or field values not useful for identifying issue similarity, for example.

In some embodiments, the method comprises providing the input issue request as training data to the multimodal model.

Some embodiments include a tangible, non-transitory, machine-readable memory storing instructions that, when executed by a data processing apparatus such as a processor, cause the data processing apparatus to perform one or more described operations.

Some embodiments include a system comprising one or more processors, memory, or other components. The memory stores instructions that, when executed by the one or more processors, effectuate one or more described operations.

### BRIEF DESCRIPTION OF THE DRAWINGS

The above-mentioned aspects and other aspects of the present techniques will be better understood when the present application is read in view of the following figures in which like numbers indicate similar or identical elements.
FIG. 1A is a logical-architecture block diagram that illustrates a system configured for load balancing and distributing issue requests for resolution by assignable resources.
FIG. 1B illustrates a second potential embodiment of the system shown in FIG. 1A.
FIG. 1C illustrates a third potential embodiment of the system shown in FIG. 1A and 1B.
FIG. 1D illustrates a fourth potential embodiment of the system shown in FIG. 1A, FIG. 1B, and FIG. 1C.
FIG. 2 illustrates an example architecture diagram for the operations performed by the computing engine and processor shown in FIG. 1A (or FIG. 1B, 1C, or 1D).
FIG. 3 illustrates an example flow of operations performed by the system and multimodal model described as part of FIG. 1A (or FIG. 1B, 1C, or 1D).
FIG. 4 illustrates another example flow of other example operations performed by the system and multimodal model described as part of FIG. 1A (or FIG. 1B, 1C, or 1D).
FIG. 5 illustrates different example embodiments of a method for load balancing and distributing issue requests for resolution by assignable resources.

### DETAILED DESCRIPTION OF CERTAIN EMBODIMENTS

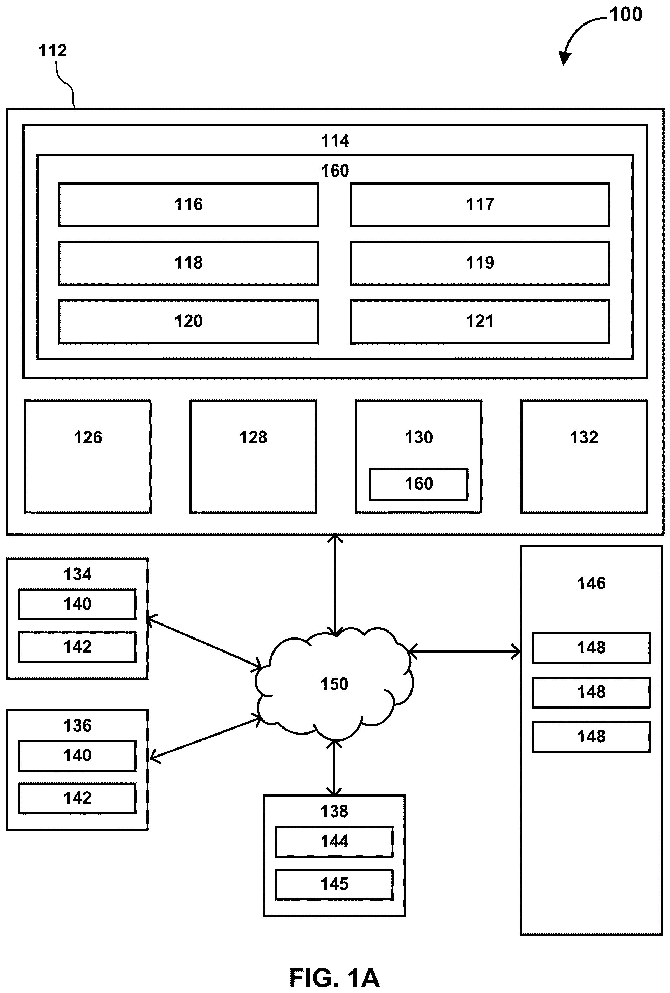

FIG. 1A illustrates a system 100 comprising a computing engine 112 and other components configured for load balancing and distributing issue requests for resolution by assignable resources. An issue request is a request for assistance (e.g., help) to resolve an issue (e.g., a problem) associated with software, hardware, or other technology. An issue request may take the form of a "ticket" or have other formats. An issue request or ticket comprises a structured record configured to track, manage, or document a specific issue, task, request, or interaction between a requestor and the assignable resources. An issue request or ticket may be associated with a specific incident, or multiple incidents that require technology support for resolution. An incident comprises an event or occurrence, often unplanned, that interrupts normal operations or routines. An incident can have varying levels of significance or impact. In the context of information technology, an incident may comprise an unplanned disruption to software based services provided by a crashed server, a customer's virtual machine which fails to start for various reasons, a host server which fails to boot due to various reasons, or other incidents, for example.

An issue request requires attention by an assignable resource. An assignable resource comprises one or more designated responsible individuals or teams of individuals who are responsible for resolving an issue request. For each of these incidents, a new ticket may be assigned to someone who worked on something similar. To extend the examples given above, the virtual machine may have failed to start due to a memory leak. The corresponding ticket may be assigned to someone who also worked on a virtual machine start failure due to memory leak. In the server boot failure example, the boot failure may be due to a networking issue, in which case the corresponding ticket may be assigned to someone who has worked on similar networking errors before.

As described above, there are two main techniques conventional systems use for distributing issue requests or tickets (noting that other techniques also exist). First, a schedule model may be implemented where a resource is assigned as a primary resource during a scheduled time window. During this scheduled time window, any issue requests or tickets that are received are assigned directly to the primary resource. Received tickets are assigned to the primary resource for the scheduled time window no matter how many tickets are received, and no matter what subject matter is associated with a ticket. Sometimes the primary resource is not familiar with the subject matter associated with a ticket. Also, tickets are not necessarily generated evenly across scheduled time windows, leading to uneven ticket distribution between assignable resources. For example, with cascade failures (e.g., when a failure in one part of a system causes subsequent failures in other interconnected or dependent components), numerous issue requests are received within a short period of time due to an ongoing outage or other issue. This can cause some assignable resources to be overly busy while other assignable resources have available capacity, and artificially inflate resolution time (e.g., because a single assignable resource is working their way through each received ticket), among other disadvantages. Second, a central queue may be used with a first in first out method for assigning issue request or ticket ownership and driving resolution. This technique can lead to a lack of accountability among assignable resources and is prone to backlog build up, where issue requests take longer to resolve, for example.

Advantageously, system 100 is configured to prioritize distributing issue requests or tickets to assignable resources with recent prior experience handling issue requests with the same or similar issues, and to assignable resources with available capacity. This facilitates faster resolution of issue requests (especially issue requests with issues similar to or the same as those of prior issue requests), mitigates the burden on any single assignable resource, creates subject matter experts within the group of assignable resources, and has other positive effects.

System 100 provides technical solutions to technical problems related to load balancing and distributing issue requests for resolution by assignable resources. As described in greater detail below, system 100 provides a new structure (e.g., issue request assignment to resources based on expertise and availability rather than a scheduled time window or first in first out techniques) that provides load balancing and distributing issue requests for resolution by assignable resources. Issue request time to resolution is decreased. System 100 provides for more balanced workload distributions - even during cascade failures, as previously described, which by either scheduler or central queue can lead to ticket load issues. System 100 also improves human-computer interaction at least by reducing the burden on assignable resources by more evenly distributing issue requests, and distributing issue requests to assignable resources with prior expertise. System 100 also increases computing efficiency by analyzing issue requests and identifying prior similar issue requests with a trained multimodal model, and assigning an issue request based on this similarity, among other advantages.

For example, system 100 is configured to process data associated with a new issue request in order to route or otherwise assign it to an assignable resource (e.g., an engineering team) that has availability, and either has demonstrated expertise to handle the issue or has prior experience that indicates the engineering team likely to be able to handle the new issue request efficiently. The assigning and routing is performed based on data processing of the information in the issue request, which is used to generate input for a multimodal model trained on a historical set of issue request (ticket) routing and completion data. Using the multimodal model, system 100 can identify some issue requests as being more difficult and requiring more work by an assignable resource (e.g., based on prior similarly difficult issue requests) compared to other issue requests, to help make the assignment of issue requests more even among assignable resources. Also, assignment of issue requests based on output from the trained multimodal model is completed in seconds or minutes. This creates accountability since a single resource quickly becomes responsible for driving an issue request to completion.

More details related to the technical solution(s) provided by system 100 are described below, after introducing the components of system 100 and describing their operation. It should be noted, however, that not all embodiments necessarily provide all of the benefits outlined herein, and some embodiments provide all or a subset of these benefits or different benefits, as various engineering and cost tradeoffs are envisioned, which is not to imply that other descriptions are limiting.

System 100 includes computing engine 112, which may interact with mobile user devices 134 and 136, a desktop user device 138, external resources 146, or other systems. Interaction with users or other entities such as a company server (which may be represented by any of the computing devices shown in FIG. 1A, included in external resources, etc.) occurs via a website or a native application viewed on a desktop user device 138, a mobile user device 134 or 136, or other components. In some embodiments, interaction occurs via a desktop user device 138 such as a desktop computer, a mobile website viewed on a smart phone, tablet, or other mobile user device 134 or 136, or via a special-purpose native application executing on a smart phone, tablet, or other mobile user device. Load balancing and distributing issue requests for resolution by assignable resources across a variety of devices is expected to make it easier for the assignable resources to request or receive desired information when and where convenient for the assignable resources, or have other advantageous effects.

In some embodiments, computing engine 112 includes one or more of a processor 114, an application program interface (API) server 126, a web server 128, a memory 130, and a cache server 132. These components, in some embodiments, communicate with one another in order to provide the functionality of computing engine 112 described herein.

To illustrate an example of the environment in which computing engine 112 operates, FIG. 1A includes a number of components with which computing engine 112 communicates: mobile user devices 134 and 136; a desktop user device 138; and external resources 146. These devices communicate with computing engine 112 via a network 150, such as the Internet or the Internet in combination with various other networks, like local area networks, cellular networks, Wi-Fi networks, or personal area networks.

Mobile user devices 134 and 136 comprise smart phones, tablets, gaming devices, or other hand-held networked computing devices having a display, a user input device (e.g., buttons, keys, voice recognition, or a single or multi-touch touchscreen), memory (such as a tangible, machine-readable, non-transitory memory), a network interface, a portable energy source (e.g., a battery), and a processor (a term which, as used herein, includes one or more processors) coupled to these components. The memory of mobile user devices 134 and 136 stores instructions that when executed by the associated processor provide an operating system and various applications, including a web browser 142, a native mobile application 140, or both. The desktop user device 138 also includes a web browser 144, a native application 145, or other electronic resources. In addition, desktop user device 138 includes a monitor; a keyboard; a mouse; memory; a processor; and a tangible, non-transitory, machine-readable memory storing instructions that when executed by the processor provide an operating system and the web browser 144 or the native application 145.

Native applications 140 and 145, and web browsers 142 and 144, in some embodiments, are operative to provide a graphical user interface associated with a user, for example, which communicates with computing engine 112 and facilitates user interaction with data from computing engine 112. In some embodiments, computing engine 112 is stored on or otherwise executed by user computing resources (e.g., a user computer, server, etc., such as mobile user devices 134 and 136, and desktop user device 138 associated with a user), servers external to the user, or in other locations. In some embodiments, computing engine 112 is run as an application (e.g., an app such as native application 140) on a server, a user computer, or other devices. In the context of system 100, a user may be a person or other entity (including another computing system) that submits or otherwise provides an issue request (or corresponding information that causes generation of an issue request), an assignable resource, or other users.

External resources 146 include sources of information such as databases, websites, etc.; external entities participating with system 100; one or more servers outside of system 100; a network (e.g., the internet); electronic storage; equipment related to Wi-Fi ^{™} technology; equipment related to Bluetooth^{®} technology; data entry devices; or other resources. External resources 146 include data sources 148. Data sources 148 may include identification or incident numbers associated with issue requests, titles of issue requests, an error message associated with an input issue request, an error signature associated with an issue request, an indication of one or more locations associated with an issue request, equipment associated with an issue request, one or more tags associated with an issue request, discussion context on historical incidents, prior transfer history, issue request origin information, an indication of the issue request creation mechanism (e.g., did a user email, text, call, who or what did they contact, etc., to identify a particular issue), indications of resources assigned to resolve prior issue requests, indications of whether prior attempted resolutions were successful, etc.; all of which information may be stored in one or more data sources 148.

Data sources 148 are those available to system 100 for searching or otherwise using to function as described. Data sources 148 may comprise a large and varying set of data sources, with many different types of data, access protocols, etc.. In some embodiments, data sources 148 comprise tabular data, graph data, data tables, columns of data, documents, charts, images, video, sensor data, or other data. Even though only a small number of data sources 148 are shown in FIG. 1A, these are intended to represent tens, hundreds, thousands, millions, or billions of different available data sources 148. In some embodiments, some or all of the different available data sources 148 are co-located (e.g., in a database server associated with system 100), or individual available data sources 148 are located remotely from other data sources 148 (e.g., in different database servers associated with an organization and located across the world).

In some embodiments, some or all of the functionality attributed to external resources 146 is provided by resources included in system 100. External resources 146 are configured to communicate with computing engine 112, mobile user devices 134 and 136, desktop user device 138, or other components of system 100 via wired or wireless connections, via network 150 (e.g., a local area network or the internet), via cellular technology, via Wi-Fi technology, or via other resources.

Thus, computing engine 112, in some embodiments, operates in the illustrated environment by communicating with a number of different devices and transmitting instructions to various devices to communicate with one another. The number of illustrated external resources 146, desktop user devices 138, and mobile user devices 136 and 134 is selected for explanatory purposes only, and embodiments are not limited to the specific number of any such devices illustrated by FIG 1A, which is not to imply that other descriptions are limiting.

Memory 130 stores instructions 160 that, when executed by processor 114, cause processor 114 to execute the various operations described herein. In some embodiments, memory 130 stores or is configured to access other data (e.g., data in one or more data sources 148 described above) required for load balancing and distributing issue requests for resolution by assignable resources, or other information that otherwise allows system 100 to function as described herein. In some embodiments, memory 130 includes various types of data stores, including relational or non-relational databases; image, document, etc., collections; or programming instructions for example. In some embodiments, such components are formed in a single database, or are stored in separate data structures. In some embodiments, memory 130 comprises electronic storage media that electronically stores information. In some embodiments, the electronic storage media of memory 130 includes one or both of system storage that is provided integrally (i.e., substantially non-removable) with system 100 or other storage that is connectable (wirelessly or via a wired connection) to system 100 via, for example, a port, a drive, a network (e.g., the Internet), etc.. In some embodiments, memory 130 is (in whole or in part) a separate component within system 100, or memory 130 is provided (in whole or in part) integrally with one or more other components of system 100 (e.g., processor 114). In some embodiments, memory 130 is located in a data center, in a server that is part of external resources 146, in a computing device 134, 136, or 138, or in other locations. In some embodiments, memory 130 includes one or more of optically readable storage media, magnetically readable storage media, electrical charge-based storage media (e.g., EPROM, RAM, etc.), solid-state storage media, or other electronically readable storage media. In some embodiments, memory 130 stores software algorithms, information determined by processor 114, information received via a graphical user interface displayed on computing devices 134, 136, or 138, information received from external resources 146 (e.g., data from a search of a data source 148), or other information accessed by system 100 to function as described herein.

Processor 114 is configured to coordinate the operation of the other components of computing engine 112 to provide the functionality described herein. In some embodiments, processor 114 is formed by two or more processors, for example. As shown in FIG. 1A, in some embodiments, instructions 160 comprise an attribute module 116, a representation module 117, an comparison module 118, an output module 119, an expertise module 120, and a routing module 121. Processor 114 is configured to direct the operation of modules 116, 117, 118, 119, 120, or 121 by software; hardware; firmware; some combination of software, hardware, or firmware; machine-readable instructions; or other mechanisms for configuring processing capabilities.

Attribute module 116 is configured to determine attributes of an input issue request with a multimodal model. In some embodiments, the input issue request comprises a ticket or other input issue request. For example, a ticket or other input issue request may comprise a structured record configured to track, manage, or document a specific issue, task, request, or interaction between a requestor (e.g., a user as discussed herein) and assignable resources. An issue request may be received from various computing platforms, including servers, desktop computers, mobile devices, web browsers, a specific electronic application running on a computing platform, a telephone, or from other sources. In some embodiments, an issue request may be generated (e.g., a ticket may be generated) by attribute module 116 or another component of system 100 based on information received via the various computing platforms.

Attribute module 116 may interact directly with the various computing platform and external systems, such as databases, APIs (application programming interfaces), or network services, to provide this functionality. An issue request may be generated based on an individual's or other entity's interactions with an operating system, an electronic application, hardware, or other components to perform tasks, access information, or utilize its services. Individuals may vary in their roles, ranging from end users who engage directly with software or hardware user interfaces, to administrators responsible for configuring and managing such software or hardware. Individuals may access such software or hardware through various devices as shown in FIG. 1A, and may interact with the software or hardware accordingly.

The multimodal model may be a large language model (LLM) or another multimodal model. In some embodiments, the LLM is a generative pre-trained transformer (GPT). The LLM or GPT is trained on a historical set of issue request routing and completion data. The historical set of issue request routing and completion data comprises other issue requests, attributes of the other issue requests, other lower dimensional representations (e.g., as described below) of the other issue requests, resources assigned to each of the other issue requests, indications of whether the other issue requests were successfully resolved, or other information. Attribute module 116 may be configured (acting together with one or more other modules 117-121) to provide new input issue requests as training data to the multimodal model, in combination with corresponding routing and completion data (once available). In some embodiments, the LLM may be retrained using a plurality of new issue requests to ensure the LLM remains tuned with enhanced semantic capturing capabilities for word embedding or other purposes. The retraining may occur at scheduled time intervals; each time a new issue request is received, assigned, or resolved; responsive to a user request for retraining; responsive to a new signal or metric being determined to be valuable or otherwise noteworthy, or at other intervals.

Attributes of an (input) issue request comprise characteristics or elements of the issue request that influence how the multimodal model processes input and generates output. The multimodal model may use the attributes to parse and understand an issue request more fully, for example, generate an appropriate output, or perform other operations. The attributes of the input issue request comprise entities and context associated with the input issue request, or other information. The entities and context comprise signals associated with the input issue request. A signal comprises meaningful information within an issue request that the multimodal model can use to guide its processing and output. A signal is distinct from noise or irrelevant data in an issue request.

For example, entities are often nouns or proper names that can represent things like people, places, organizations, products, dates, numbers, measurable quantities, or other concrete, distinguishable concepts. Entities are often associated with an application of interest (e.g., an operating system, a specific application running on an operating system, etc.). Entities may comprise tokens associated with at least one of specific, identifiable items or concepts that have meaning within an issue request. A token is a fundamental unit (e.g., of text) that attribute module 116 uses to process and understand an issue request. Tokenization comprises breaking issue request text into smaller pieces, or tokens, which include words, sub-words, characters, punctuation marks, or other tokens. In some embodiments, the entities comprise one or more of: identification or incident numbers, a title of an issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, an issue request creation mechanism, or other information.

Context refers to the surrounding information or circumstances that give meaning to an issue request, a word or words in the issue request, or a phrase in the input issue request. Context helps attribute module 116 understand how to interpret an issue request in its entirety, to determine the attributes. Context can be derived from previous issue requests, background information about the requestor (e.g., location, preferences), a logical or temporal relationship between words in the issue request, etc.. In some embodiments, context in an issue request includes verbs, adjectives, or other things that enhance understanding of entities mentioned in the issue request. In some embodiments, the context functions as or provides a filter for attribute determination. In some embodiments, an entity can form context for a second entity. In some embodiments, determining the attributes of an issue request comprises decomposing the issue request by evaluating qualifiers in the issue request related to at least one of the entities or the context. In some embodiments, context comprises tokens associated with at least one of surrounding information, background, or situational factors present in the input issue request that influence determining the attributes of the input issue request. In some embodiments, the context comprises tokens associated with at least one of surrounding information, background, or situational factors present in an issue request that influence generating the lower dimensional representation of the issue request. In some embodiments, the context comprises tokens indicative of one or more of symptoms associated with an issue request, relationships between entities in an input issue request, hierarchical relationships associated with an input issue request, or other information. A symptom may comprise a perceived impact of an underlying issue to a creator or end user - for example a computer that a user attempts to start but which does not turn on as expected. As another example, a symptom may be an increase in measured error counts over some time range. In some embodiments, a symptom can be, or be associated with, the "root cause" or the actual underlying issue which made other symptoms manifest.

In some embodiments, attribute module 116 is configured to clean the text of an input issue request prior to attribute determination by the multimodal model. The cleaning comprises removing noise from the input issue request, or other operations. The noise may comprise injected input not specific to an issue associated with the input issue request, field values not useful for identifying issue similarity (e.g., with other prior issue requests), or other information. In some embodiments, attribute module 116 is configured to monitor for new issue request generation, or new issue request transfer to a given resolution resource, and invoke the operations described herein responsive to new issue request generation or the transfer to the given resolution resource. This process may include scanning for relevant data, querying an operating system, identifying new data in data structures associated with issue requests, or other operations. Monitoring may include electronically receiving or retrieving this data. This may involve issuing system calls or utilizing APIs to retrieve data about issue requests, or other operations.

Representation module 117 is configured to generate, with the multimodal model, a lower dimensional representation of an (input) issue request. The lower dimensional representation is a condensed version of the issue request that captures the most relevant or important features of the issue request. The lower dimensional representation makes processing, storage, comparison (e.g., as described below), or other operations associated with the issue request more efficient, while retaining meaningful information about the issue request. The lower dimensional representation has fewer dimensions than a number of dimensions associated with the issue request. Each dimension corresponds to a distinct attribute, aspect, data pattern, or other feature of the issue request. The lower dimensional representation is generated based on the attributes of the issue request, or other information. The lower dimensional representation may have any number of different dimensions (e.g., one, two, three, ten, one hundred, one thousand, or more dimensions). In addition, the dimensions used in a lower dimensional representation may vary from one lower dimensional representation to the next. In some embodiments, generating the lower dimensional representation comprises encoding the attributes of the input issue request into a vector or some other encoding that represents the lower dimensional representation.

Comparison module 118 is configured to utilize the multimodal model to compare the lower dimensional representation to other lower dimensional representations of other issue requests to identify prior similar issue requests. The lower dimensional representations may be compared across any number of dimensions. The lower dimensional representations may be compared using mathematical metrics, for example, configured to determine similarity or distance between the lower dimensional representations. In some embodiments, the lower dimensional representation of the input issue request and the other lower dimensional representations of other issue requests comprise vectors. Comparison module 118 may be configured to use mathematical metrics that determine similarity or distance between vectors in a vector space. These comparisons may quantify how alike or different the two vectors are, based on their orientation or proximity in the vector space, or based on other factors.

Output module 119 is configured to use the multimodal model to output indications of similarity strength for prior similar issue requests relative to a current input issue request. The indications of similarity strength can identify issue requests with similar or overlapping subject matter, issue requests that are more difficult and require more work by an assignable resource (e.g., based on prior similarly difficult issue requests) compared to other issue requests, or other indications of similarity strength. More difficult issue request, or issue requests that require more work, may be identified based on the time a resource is expected to spend working on the issue request (e.g., determined based on similar prior issue requests), an amount of assignable resources that were involved in the resolution of prior similar issues - i.e., was a prior similar issue request passed around to multiple teams before a resolution was reached, the proximity of a match with a recently resolved issue - e.g., if there is an almost identical issue which was resolved last week, a new similar issue request may be an "easier" issue request as it is fresh and there is an existing example.

These indications of similarity strength for prior similar issue requests relative to a current input issue request are determined based on the comparing, indications of resources assigned to resolve each prior similar issue request (e.g., stored in and retrieved from external resources 146 or data sources 148), or other information. The indications of similarity strength may include or be based on cosine distances, Euclidean distances, dot products, Manhattan Distances, Jaccard Similarities, Mahalanobis distances, or other indications. For example, in some embodiments, the indications of similarity strength comprise cosine distances between vectors (e.g., a vector representing an input issue request and one or more vectors representing one or more prior issue requests). A cosine distance comprises the cosine of the angle between two vectors. A cosine similarity of one indicates that the vectors point in the same direction, while a cosine similarity of negative one means they point in opposite directions (i.e., the closer the cosine similarity is to one, the more similar a prior issue request is to a current input issue request). The cosine distance between two vectors is determined by taking the dot product of the two vectors, and dividing the dot product by the product of their magnitudes.

Expertise module 120 is configured to determine an expertise level for the assignable resources based on the indications of similarity strength and the indications of resources assigned to resolve the prior similar issue requests. For example, expertise module 120 may determine an expertise level for each assignable resource in the assignable resources based on the indications of similarity strength and the indications of resources assigned to resolve each prior similar issue request, or other information. Determining the expertise level for each assignable resource in the assignable resources comprises determining whether the assignable resources successfully resolved the prior similar issue request. Resources assigned to prior similar issue requests who were able to successfully resolve that issue request are determined to have more expertise in the issues relevant to that issue request compared to other assignable resources. For example, an engineer who successfully resolved and/or was the last assigned resource the last time a similar issue was observed would be determined to have more expertise than other assignable resources. Repetitions of the above may bolster that engineer's determined expertise level. This data may be stored in a queried database (see FIG. 1A).

Routing module 121 is configured to determine routing metrics for the assignable resources. A routing metric may be a score, a number, a rating, a prioritization level, or other routing metric. The routing metrics are determined based on combinations of the expertise levels and availabilities of the assignable resources. This ensures that an issue request is routed to an assignable resource with expertise, who also has availability. The availability of each assignable resource is determined based on a total number of issue requests assigned to each assignable resource, a total time spent on a particular issue request by each assignable resource, a difficulty level associated with an issue request, or other factors. In some embodiments, one or more factors may be weighted more or less heavily to determine a routing metric. For example, difficulty may be a function of estimated completion time, and so estimated completion time might be weighted more heavily that other factors when determining a routing metric. As another example, routing module 121 may be configured to determine a routing metric for each assignable resource based on an equally weighted combination of the expertise level, a difficulty level associated with an issue request, and an availability of each assignable resource, or other information. Routing module 121 is configured to rout an input issue request to an assignable resource in the assignable resources based on the routing metrics or other information. An assignable resource with a highest or best routing metric for a given issue request may be assigned that issue request, for example. As described above, the assignable resources comprise designated responsible individuals or teams of individuals (e.g., an engineer or team of engineers, an information technology help desk representative, etc.). Phrased another way, routing module 121 is configured such that routing the input issue request to an assignable resource in the assignable resources based on the routing metric comprises prioritizing distribution of the input issue request to a designated responsible individual or team of individuals who has already been assigned or resolved one or more prior similar issue requests, and who has sufficient availability.

In some embodiments, output module 119 may be configured to output the indications of similarity strength, difficulty, an assigned resource, or other information determined by other modules 116-121 for display on one or more of the computing devices shown in FIG. 1A. For example, output module 119 may be configured to output an issue request (or an indication thereof), a routing metric (e.g., as described above), an indication of the assigned resource, or other information for display. The operations performed by modules 116-121 may be repeated (e.g., simultaneously or in succession) for tens, hundreds, thousands, or more issue requests.

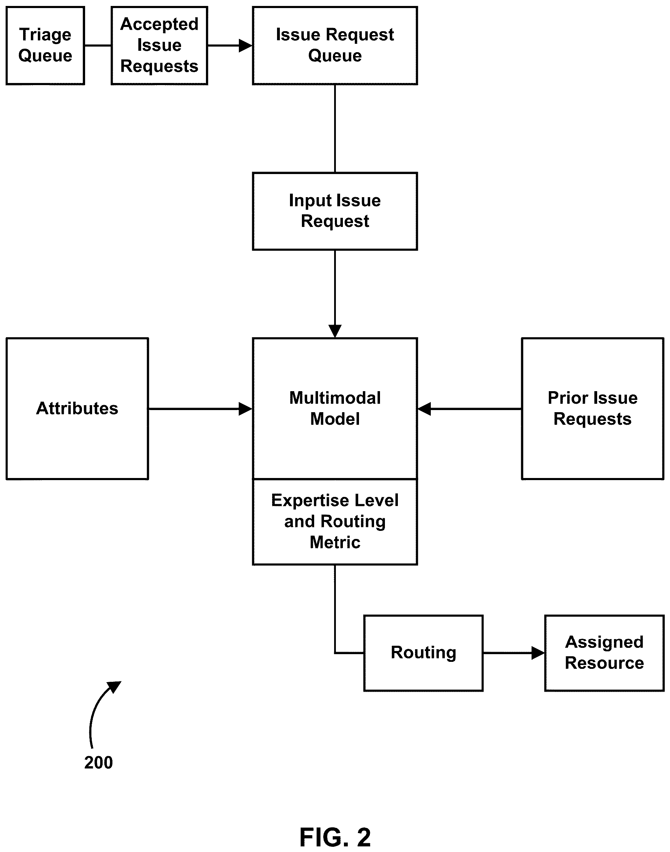

Several additional details related to the operations performed by modules 116-121 are illustrated in FIG. 2-4, and described below.

For example, FIG. 2 illustrates an example architecture diagram 200 for the operations performed by computing engine 112 and processor 114 (FIG. 1A). As shown in FIG. 2, a multimodal model is used to determine attributes of an input issue request (see attribute module 116 shown in FIG. 1A and described above). A lower dimensional representation of the input issue request is generated based on the attributes (e.g., see representation module 117). The multimodal model is used to compare the lower dimensional representation to other lower dimensional representations of other prior issue requests to identify prior similar issue requests (e.g., see comparison module 118). Data associated with the other prior issue requests may be stored in one or more data sources 148 (FIG. 1A), for example. The multimodal model outputs indications of similarity strength for each prior similar issue request relative to the input issue request determined based on the comparing. The multimodal model also outputs indications of resources assigned to resolve each prior similar issue request. An expertise level is determined for each assignable resource in the assignable resources based on the indications of similarity strength and the indications of resources assigned to resolve each prior similar issue request (e.g., see expertise module 120). A routing metric for each assignable resource is determined based on a combination of the expertise level and an availability of each assignable resource; and the input issue request is routed to an assignable resource in the assignable resources based on the routing metric (e.g., see routing module 121). In this example, the input issue request is routed to the assignable resource (e.g., a designated responsible individual or individuals such as an engineer or team of engineers) via a portal (e.g., where the assignable resource might regularly check for assignments). However, the issue request might also or instead be routed directly to the assignable resource (e.g., via email, a messaging system, etc.).

Details of input issue requests such as properties associated with an input issue request, discussions associated with an input issue request, an error signature, a source of the input issue request, teams who have already contributed to the investigation of an input issue request (as just a few of many possible examples) can be collected and integrated within a cloud storage service (e.g., represented by one or more data sources 148 in FIG. 1A) using a Kusto API, for example. Assignable resource data such as a list of previously resolved issue requests, mitigated issue requests, or issue requests accurately routed to an appropriate assignable resource (again as a subset of many other possible examples of queried data) can also be queried using the Kusto API.

The triage queue shown in FIG. 2 is used for initially collecting and queuing issue requests. The triage queue may be used to collect issue requests with a threshold severity, for example, or other characteristics. The threshold severity may be used to identify issue requests that do or do not require immediate attention by an assignable resource. To increase fault tolerance and enable asynchronous execution, multimodal model functionality may be decoupled from the triage queue. As shown in the example in FIG. 2, a separate issue request queue may be used to push jobs (enqueuing new issue requests for processing through the multimodal model in FIG. 2) for every new issue request arriving in the triage queue. This facilitates use of a poison queue in the issue request queue to place failed issue requests (e.g., issue requests that are not able to be routed to an assignable resource) after one or more re-attempts. For example, a poison queue is configured to capture any issue request which was processed through the multimodal modal and was unable to be routed to an assignable resource for any number of reasons - e.g., a programming error occurred due to some particular way this new issue request was created, or some dependent system is offline, etc..

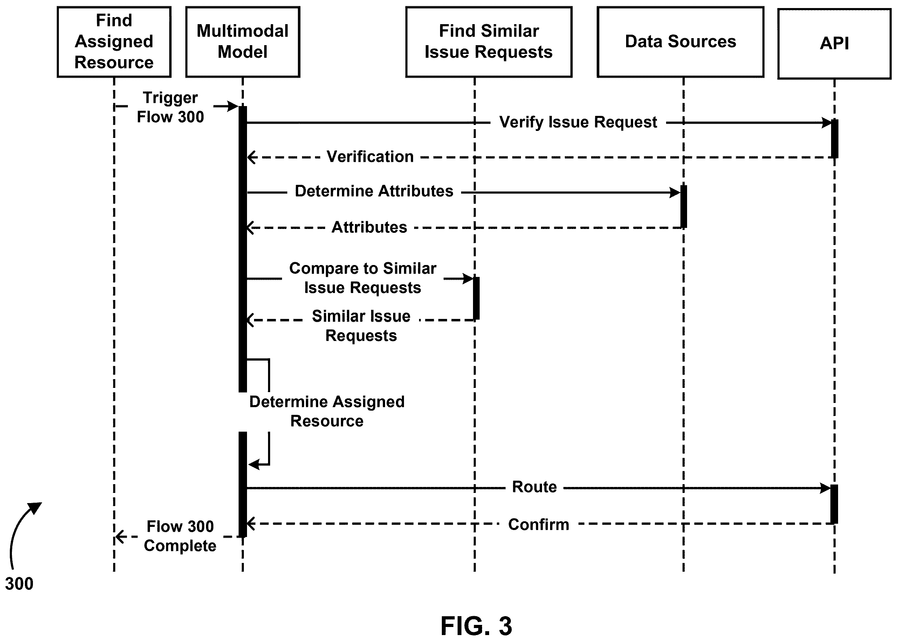

FIG. 3 illustrates an example flow 300 of some of example operations performed by system 100 (FIG. 1A) and the multimodal model described above. FIG. 3 provides an alternative visual illustration of some of the operations shown in FIG. 2. FIG. 3 illustrates verifying an issue request, determining attributes of the issue request, comparing the attributes to other prior similar issue requests, determining an assigned resource, routing the issue request to that assigned resource, and completing flow 300 once the assignment is confirmed.

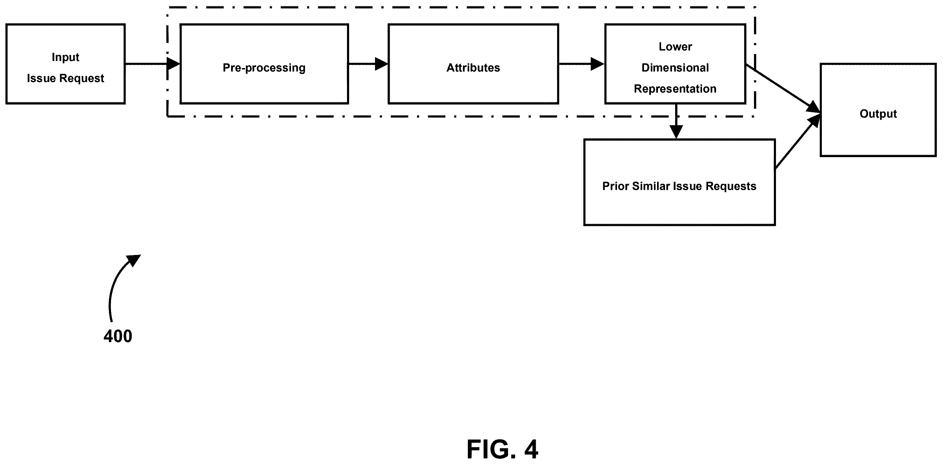

FIG. 4 illustrates another example flow 400 of other example operations performed by system 100 (FIG. 1A) and the multimodal model described above. FIG. 4 illustrates operations specific to multimodal model input, processing, and output (e.g., performed by the multimodal model shown in FIG. 2, and associated with the determining attributes through the determining similar issue requests operations shown in FIG. 3). FIG. 4 illustrates monitoring for new input issue request generation or new issue request transfer to a given resolution resource, and invoking the operations of FIG. 4 responsive to new issue request generation or the transfer to the given resolution resource. FIG. 4 illustrates pre-processing, comprising cleaning text of an input issue request. The cleaning comprises removing noise from the input issue request. The noise comprises injected input not specific to an issue associated with the input issue request or field values not useful for identifying issue similarity. FIG. 4 illustrates determining, with a multimodal model such as a generative pre-trained transformer (GPT), attributes of the input issue request. The attributes comprise entities and context associated with the input issue request (e.g., signals, symptoms, tags, etc.), as described above. FIG. 4 illustrates generating, with the GPT, a lower dimensional representation (e.g., a vector representation) of the input issue request based on the attributes or other information. FIG. 4 illustrates comparing, with the GPT, the lower dimensional representation to other lower dimensional representations (e.g., other vector representations) of other issue requests to identify prior similar issue requests. The attributes, vector representation, data related to the comparison, or other data may be cached in data storage for future use. Finally, FIG. 4 illustrates outputting, from the GPT, indications of similarity strength (e.g., cosine similarity) for each prior similar issue request relative to the input issue request determined based on the comparing, and indications of resources assigned to resolve each prior similar issue request. This output is configured to be used to determine an expertise level for each assignable resource based on the indications of similarity strength and the indications of resources assigned to resolve each prior similar issue request. The routing metric described above can be determined for each assignable resource based on a combination of the expertise level and an availability of each assignable resource. Finally, the input issue request is routed to an assignable resource in the assignable resources based on the routing metric.

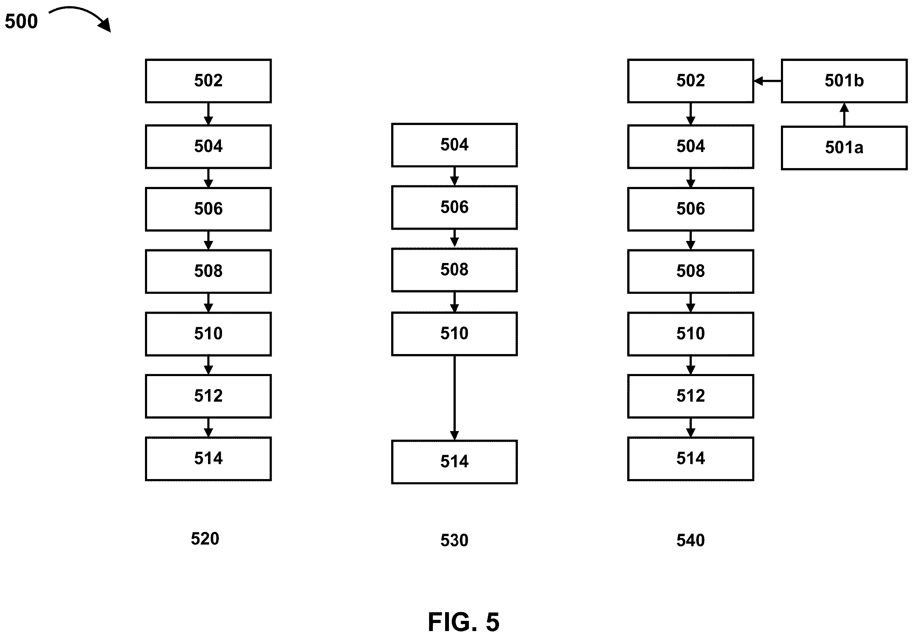

FIG. 5 illustrates different example embodiments 520, 530, and 540 of a method 500 for load balancing and distributing issue requests for resolution by assignable resources. Embodiments 520, 530, and 540 of method 500 are performed with system 100 (FIG. 1A-FIG. 1D) or other components discussed above. Embodiments 520, 530, or 540 may correspond to one or more of the pathways through the flow shown in FIG. 2-4, for example.

Embodiment 520 of method 500 begins with operation 502, comprising determining, with a multimodal model, attributes of an input issue request. The attributes comprise entities and context associated with the input issue request. Embodiment 520 continues with operation 504, comprising generating, with the multimodal model, a lower dimensional representation of the input issue request based on the attributes. Operation 506 comprises comparing, with the multimodal model, the lower dimensional representation to other lower dimensional representations of other issue requests to identify prior similar issue requests. Operation 508 comprises outputting, from the multimodal model, indications of similarity strength for each prior similar issue request relative to the input issue request determined based on the comparing, and indications of resources assigned to resolve each prior similar issue request. Operation 510 comprises determining an expertise level for each assignable resource in the assignable resources based on the indications of similarity strength and the indications of resources assigned to resolve each prior similar issue request. Operation 512 comprises determining a routing metric for each assignable resource based on a combination of the expertise level and an availability of each assignable resource; and operation 514 comprises routing the input issue request to an assignable resource in the assignable resources based on the routing metric (e.g., all as described above).

Embodiment 530 of method 500 begins with operation 504, again comprising generating, with the multimodal model, a lower dimensional representation of an input issue request based on the attributes (which are previously determined in this embodiment). Embodiment 530 continues with operation 506, comprising comparing, with the multimodal model, the lower dimensional representation to other lower dimensional representations of other issue requests to identify prior similar issue requests. Embodiment 530 includes operation 508, comprising outputting, from the multimodal model, indications of similarity strength for each prior similar issue request relative to the input issue request determined based on the comparing, and indications of resources assigned to resolve each prior similar issue request. Operation 510 comprises determining an expertise level for each assignable resource in the assignable resources based on the indications of similarity strength and the indications of resources assigned to resolve each prior similar issue request. Embodiment 530 concludes with operation 514, comprising routing the input issue request to an assignable resource in the assignable resources based on a combination of the expertise level and an availability of each assignable resource (e.g., all as described above).

Embodiment 540 of method 500 begins with operation 501a, monitoring for new input issue request generation or new issue request transfer to a given resolution resource, and invoking the operations responsive to new issue request generation or the transfer to the given resolution resource. Embodiment 540 continues with operation 501b, cleaning text of an input issue request. The cleaning comprises removing noise from the input issue request. The noise comprises injected input not specific to an issue associated with the input issue request or field values not useful for identifying issue similarity. Embodiment 540 continues with operation 502, determining, with a multimodal model comprising a generative pre-trained transformer (GPT), attributes of the input issue request. The attributes comprise entities and context associated with the input issue request. Operation 504 again comprises generating, with the GPT, a lower dimensional representation of the input issue request based on the attributes. Operation 506 comprises comparing, with the GPT, the lower dimensional representation to other lower dimensional representations of other issue requests to identify prior similar issue requests. Operation 508 comprises outputting, from the GPT, indications of similarity strength for each prior similar issue request relative to the input issue request determined based on the comparing, and indications of resources assigned to resolve each prior similar issue request. Operation 510 comprises determining an expertise level for each assignable resource in the assignable resources based on the indications of similarity strength and the indications of resources assigned to resolve each prior similar issue request. Operation 512 comprises determining a routing metric for each assignable resource based on a combination of the expertise level and an availability of each assignable resource. Embodiment 540 again concludes with operation 514, routing the input issue request to an assignable resource in the assignable resources based on the routing metric.

Embodiments 520, 530, and 540 of method 500 may include additional operations that are not described, or not include one or more of the operations described below. The operations of embodiments 520, 530, and 540 of method 500 may be performed in any order that facilitates load balancing and distributing issue requests for resolution by assignable resources, as described herein. Even though these are shown as separate embodiments, operations from one embodiment may be combined with another. In addition, embodiments 520, 530, and 540 are not the only three possible embodiments of method 500. Other variations are contemplated.

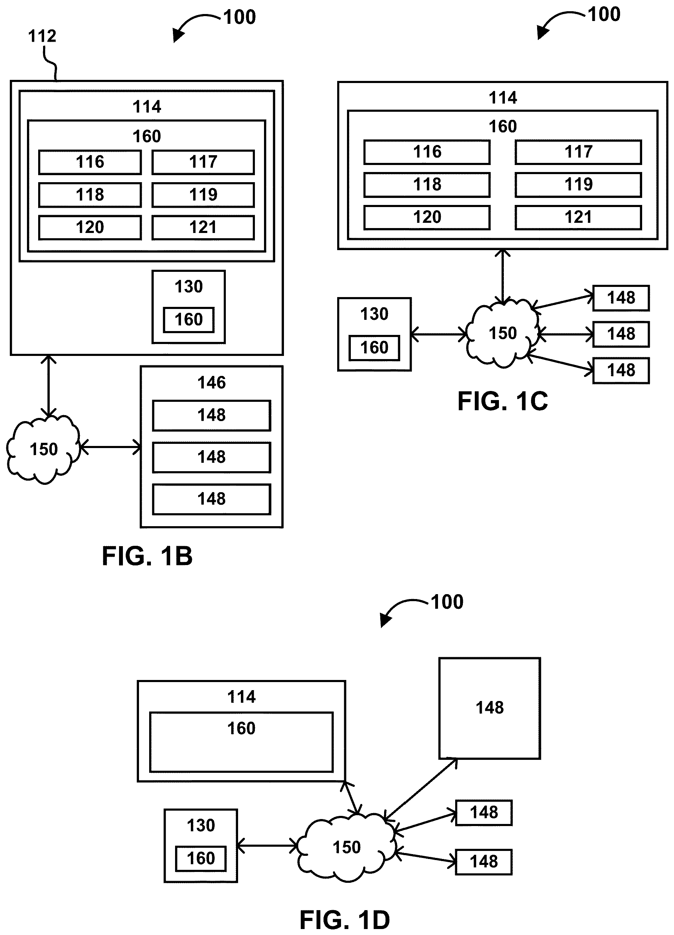

Returning to FIG. 1A, system 100 can have many different forms, with or without some or all of the components shown in FIG. 1A, and still be configured to function as described. For example, FIG. 1B, FIG. 1C, and FIG. 1D illustrate examples of alternative potential embodiments of system 100. FIG. 1B illustrates system 100 without API server 126, web server 128, cache server 132, mobile user devices 134 and 136, or desktop user device 138 (e.g., which in this example are their own standalone devices, apart from system 100). FIG. 1C illustrates system 100 with processor 114, instructions 160 (including the different modules 116-121), memory 130 (which may or may not be included in the same computing structure as processor 114), and data sources 148. In this example, the data sources are their own separate entities, not necessarily being related to each other. FIG. 1D illustrates system 100 with processor 114, instructions 160 (without being separately divided into the different modules 116-121), memory 130 (which again may or may not be included in the same computing structure as processor 114), and data sources 148. Other embodiments with different arrangements of components are contemplated.

In FIG. 1A - 1D, the different components of system 100 are illustrated communicating via network 150. This is not intended to be limiting. As described herein, different components of system 100 communicate via network 150 (as shown), via wired connections, or via other wired or wireless connections. The illustrated components communicate directly with each other (e.g., via network 150 or a wired connection), or indirectly via other components of system 100.

It should be noted that in some embodiments, computing engine 112 is configured such that in the above mentioned operations of processor 114, input from users or sources of information inside or outside system 100, are processed by processor 114 through a variety of formats, including clicks, touches, uploads, downloads, etc.. The illustrated components (e.g., processor 114, API server 126, web server 128, memory 130, and cache server 132) of computing engine 112 are depicted as discrete functional blocks, but embodiments are not limited to systems in which the functionality described herein is organized as illustrated by FIG. 1A - 1D. In some embodiments, the functionality provided by the components of computing engine 112 (FIG. 1A, 1D) or processor 114 (FIG. 1A-1D) is provided by software or hardware modules that are differently organized than is presently depicted, for example such software or hardware is intermingled, broken up, distributed (e.g., within a data center or geographically), or otherwise differently organized. In some embodiments, the functionality described is provided by one or more processors of one or more computers executing code stored on a tangible, non-transitory, machine readable medium.

In some embodiments, computing engine 112 (FIG. 1A, 1D) or processor 114 (FIG. 1A-1D) is provided with or within one or more portions of a multimodal model, or multiple multimodal models that include one or more neural networks. In some embodiments, these models, or portions thereof, are generated, executed, or otherwise utilized by computing engine 112 or processor 114 (or one or more of the components of processor 114) as shown in FIG. 1A, 1B, and 1C, and described above.

In some embodiments, a multimodal model comprises a large language model (LLM), a generative model (e.g., a generative pre-trained transformer or GPT), or other models. In some embodiments, the multimodal model comprises one or more individual algorithms (e.g., that form a LLM, a generative model, a transformer, a neural network, an adapter, etc.). In some embodiments, an algorithm is a machine learning algorithm. In some embodiments, the machine learning algorithm is or includes a neural network, classification tree, decision tree, support vector machine, or other model that is trained and configured to output a response to input query. As an example, neural networks are based on a large collection of neural units (or artificial neurons). Neural networks loosely mimic the manner in which a biological brain works (e.g., via large clusters of biological neurons connected by axons). Each neural unit of a neural network is simulated as being connected with many other neural units of the neural network. Such connections can be enforcing or inhibitory in their effect on the activation state of connected neural units. In some embodiments, each individual neural unit has a summation function which combines the values of all its inputs together. In some embodiments, each connection (or the neural unit itself) has a threshold function such that the signal must surpass the threshold before it is allowed to propagate to other neural units. These neural network systems are self-learning and trained, rather than explicitly programmed, and can perform significantly better in certain areas of problem solving, as compared to traditional computer programs. In some embodiments, neural networks include multiple layers (e.g., where a signal path traverses from front layers to back layers). In some embodiments, back propagation techniques are utilized by the neural networks, where forward stimulation is used to reset weights on the "front" neural units. In some embodiments, stimulation and inhibition for neural networks is more free flowing, with connections interacting in a more chaotic and complex fashion.

Although modules 116-121 are illustrated in FIG. 1A (and 1B and 1C) as being co-located, one or more of modules 116, 117, 118, 119, 120, or 121 may be located remotely from the other modules. The description of the functionality provided by the different modules 116-121 described herein is for illustrative purposes, and is not intended to be limiting, as any of the modules 116-121 may provide more or less functionality than is described, which is not to imply that other descriptions are limiting. For example, one or more of modules 116, 117, 118, 119, 120, or 121 may be eliminated, and some or all of its functionality may be provided by others of the modules 116-121, again which is not to imply that other descriptions are limiting. As another example, processor 114 may be configured to control one or more additional modules that perform some or all of the functionality attributed to one of the modules 116-121.

Modules 116-121 are program instructions that are executable by a processor 114 to implement one or more embodiments of the present techniques. In some embodiments, program instructions include a computer program (which in certain forms is known as a program, software, software application, script, or code). A computer program is written in a programming language, including compiled or interpreted languages, or declarative or procedural languages. In some embodiments, a computer program includes a unit suitable for use in a computing environment, including as a stand-alone program, a module, a component, or a subroutine. In some embodiments, a computer program corresponds to a file in a file system. A program is stored in a portion of a file that holds other programs or data (e.g., one or more scripts stored in a markup language document), in a single file dedicated to the program in question, or in multiple coordinated files (e.g., files that store one or more modules, sub programs, or portions of code). In some embodiments, a computer program is deployed to be executed on one or more computer processors located locally at one site or distributed across multiple remote sites and interconnected by a communication network, for example.

Cache server 132 expedites access to relevant data by storing likely relevant data in relatively high-speed memory, for example, in random-access memory or a solid-state drive (e.g., formed by at least a portion of memory 130). Web server 128 serves webpages having graphical user interfaces that display one or more views that facilitate receiving entry or selection of input from a user (e.g., including a query or command that causes system 100 to generate an issue request, perform a certain task, providing context, etc.), or other views. API server 126 serves data to various applications that process data related to user requested tasks, or other data. The operation of these components (API server 126, web server 128, and memory 130) is coordinated by processor 114, which bidirectionally communicates with these components or directs the components to communicate with one another. Communication occurs by transmitting data between separate computing devices (e.g., via transmission control protocol/internet protocol (TCP/IP) communication over a network), by transmitting data between separate applications or processes on one computing device; or by passing values to and from functions, modules, or objects within an application or process, e.g., by reference or by value.

API server 126 is configured to communicate user text commands or other information via a protocol, such as a representational-state-transfer (REST)-based API protocol over hypertext transfer protocol (HTTP) or other protocols. API requests identify which output data is to be determined, displayed, linked, modified, added, or retrieved by specifying criteria for identifying tasks, such as queries for retrieving or processing information about a particular subject (e.g., a request for resolution of an issue experienced by a user). In some embodiments, API server 126 communicates with native application 140 of the mobile user device 134, native application 145 of desktop user device 138, or other components of system 100.

Web server 128 is configured to display, link, modify, add, or retrieve portions or all of an output, or other information encoded in a webpage (e.g., a collection of resources to be rendered by the browser and associated plug-ins, including execution of scripts, such as JavaScript^{™}, invoked by the webpage). In some embodiments, the graphical user interface presented by the webpage includes inputs by which the user enters or selects data, such as clickable or touchable display regions or display regions for text input. Such inputs prompt the browser to request additional data from web server 128 or transmit data to web server 128, and web server 128 responds to such requests by obtaining the requested data and returning it to the user device or acting upon the transmitted data (e.g., storing posted data or executing posted commands). In some embodiments, the requests are for a new webpage or for data upon which client-side scripts will base changes in the webpage, such as XMLHttpRequest requests for data in a serialized format, e.g., JavaScript^{™} object notation (JSON) or extensible markup language (XML). Web server 128 communicates with web browsers, such as web browser 142 or 144 executed by user devices 136 or 138. In some embodiments, the webpage is modified by web server 128 based on the type of user device, e.g., with a mobile webpage having fewer and smaller images and a narrower width being presented to the mobile user device 136, and a larger, more content rich webpage being presented to the desktop user device 138. In some embodiments, an identifier of the type of user device, either mobile or non-mobile, for example, is encoded in the request for the webpage by the web browser (e.g., as a user agent type in an HTTP header associated with a GET request), and web server 128 selects the appropriate interface based on this embedded identifier, thereby providing an interface appropriately configured for the specific user device in use.

Web browsers 142 and 144 are configured to receive a website from computing engine 112 having data related to instructions (for example, instructions expressed in JavaScript^{™}) that when executed by the browser (which is executed by the processor) cause mobile user devices 134 or 136, or desktop user device 138, to communicate with computing engine 112 and facilitate user interaction with data from computing engine 112. Native applications 140 and 145, and web browsers 142 and 144, upon rendering a webpage or a graphical user interface from computing engine 112, may generally be referred to as client applications of computing engine 112, which in some embodiments may be referred to as a server. Embodiments, however, are not limited to client/server architectures, and computing engine 112, as illustrated, may include a variety of components other than those functioning primarily as a server. Three user devices are shown, but embodiments are expected to interface with substantially more, with more than 100 concurrent sessions and serving more than 1 million users distributed over a relatively large geographic area, such as a state, the entire United States, or multiple countries across the world.

Though not illustrated in FIG. 1A (or 1B, 1C, or 1D), computing engine 112, in some embodiments, includes multiple processors 114, an input/output I/O device interface, and a network interface via an input/output (I/O) interface. In some embodiments, multiple processors are employed to provide for parallel or sequential execution of one or more portions of the techniques described herein. The I/O device interface provides an interface for connection of one or more I/O devices to computing engine 112. I/O devices include devices that receive input (e.g., from a user) or output information (e.g., to a user). I/O devices include, for example, graphical user interfaces presented on displays (e.g., a touchscreen or liquid crystal display (LCD) monitor), pointing devices (e.g., a computer mouse or trackball), keyboards, keypads, touchpads, scanning devices, voice recognition devices, gesture recognition devices, printers, audio speakers, microphones, cameras, or the like. I/O devices are connected to computing engine through a wired or wireless connection. I/O devices are connected to computing engine 112 from a remote location. I/O devices located on a remote computer system, for example, are connected to computing engine 112 via network 150 and the network interface.

The network interface includes a network adapter that provides for connection of computing engine 112 to network 150. The network interface facilitates data exchange between computing engine 112 and other devices connected to network 150. The network interface supports wired or wireless communication. In some embodiments, network 150 includes an electronic communication network, such as the Internet, a local area network (LAN), a wide area network (WAN), a cellular communications network, or the like.

The I/O interface is configured to coordinate I/O traffic between processors, memory 130, the network interface, I/O devices, or other peripheral devices. The I/O interface performs protocol, timing, or other data transformations to convert data signals from one component (e.g., memory 130) into a format suitable for use by another component (e.g., processor(s) 114). In some embodiments, the I/O interface includes support for devices attached through various types of peripheral buses, such as a variant of the Peripheral Component Interconnect (PCI) bus standard or the Universal Serial Bus (USB or USB-C) standard.

Embodiments of the techniques described herein may be implemented using a single instance of computing engine 112 or multiple computer systems configured to host different portions or instances of embodiments. Multiple computer systems may provide for parallel or sequential processing/execution of one or more portions of the techniques described herein.

While various items are illustrated as being stored in memory, these items or portions of them may be transferred between memory and other storage devices for purposes of memory management and data integrity. Alternatively, in other embodiments some or all of the software components execute in memory on another device and communicates with the illustrated computer system(s) via inter-computer communication. In some embodiments, some or all of the system components or data structures are stored (e.g., as instructions or structured data) on a computer-accessible medium or a portable article to be read by an appropriate drive, various examples of which are described above. In some embodiments, instructions stored on a computer-accessible medium separate from computing engine 112 are transmitted to computing engine 112 via transmission media or signals such as electrical, electromagnetic, or digital signals, conveyed via a communication medium such as a network or a wireless link. Various embodiments include receiving, sending, or storing instructions or data implemented in accordance with the foregoing description upon a computer-accessible medium. Accordingly, the present techniques may be practiced with other computer system configurations.

To mitigate the problems described herein, the inventors had to both invent solutions and, in some cases just as importantly, recognize problems overlooked (or not yet foreseen) by others for load balancing and distributing issue requests for resolution by assignable resources. The inventors wish to emphasize the difficulty of recognizing those problems that are nascent and will become much more apparent in the future should trends in industry continue as the inventors expect. Further, because multiple problems are addressed, it should be understood that some embodiments are problem-specific, and not all embodiments address every problem with traditional systems described herein or provide every benefit described herein. That said, improvements that solve various permutations of these problems are described.

In block diagrams, illustrated components are depicted as discrete functional blocks, but embodiments are not limited to systems in which the functionality described herein is organized as illustrated. The functionality provided by the components may be provided by software or hardware modules that are differently organized than is presently depicted, for example such software or hardware may be intermingled, conjoined, replicated, broken up, distributed (e.g., within a data center or geographically), or otherwise differently organized. The functionality described may be provided by one or more processors of one or more computers executing code stored on a tangible, non-transitory, machine readable medium. In some cases, notwithstanding use of the singular term "medium," the instructions may be distributed on different storage devices associated with different computing devices, for instance, with individual computing devices having different subsets of the instructions, an implementation consistent with usage of the singular term "medium." In some cases, third party content delivery networks may host some or all of the information conveyed over networks, in which case, to the extent information (e.g., content) is said to be supplied or otherwise provided, the information may be provided by sending instructions to retrieve that information from a content delivery network.

The reader should appreciate that the present application describes several embodiments. Rather than separating those embodiments into multiple isolated patent applications, applicants have grouped these embodiments into a single document because their related subject matter lends itself to economies in the application process. But the distinct advantages and aspects of these embodiments should not be conflated. In some cases, embodiments address all of the deficiencies noted herein, but it should be understood that the embodiments are independently useful, and some embodiments address only a subset of such problems or offer other, unmentioned benefits that will be apparent to those of skill in the art reviewing the present disclosure. Due to cost constraints, some disclosed embodiments are not presently claimed and may be claimed in later filings, such as continuation applications or by amending the present claims. Similarly, due to space constraints, neither the Abstract nor the Summary sections of the present document should be taken as containing a comprehensive listing of all such embodiments or all aspects of such embodiments.

It should be understood that the description and the drawings are not intended to limit an embodiment to the particular form disclosed, but to the contrary, the intention is to cover all modifications, equivalents, and alternatives falling within the spirit and scope of the present embodiments as defined by the appended claims. Further modifications and alternative embodiments will be apparent to those skilled in the art in view of this description. Accordingly, this description and the drawings are to be construed as illustrative only and are for the purpose of teaching those skilled in the art the general manner of carrying out the embodiments. It is to be understood that the forms of the embodiments shown and described herein are to be taken as examples of embodiments. Elements and materials may be substituted for those illustrated and described herein, parts and processes may be reversed or omitted, and certain features may be utilized independently, all as would be apparent to one skilled in the art after having the benefit of this description. Changes may be made in the elements described without departing from the spirit and scope of the embodiments as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include," "including," and "includes" and the like mean including, but not limited to. As used throughout this application, the singular forms "a," "an," and "the" include plural referents unless the content explicitly indicates otherwise. Thus, for example, reference to "an element" or "a element" includes a combination of two or more elements, notwithstanding use of other terms and phrases for one or more elements, such as "one or more." The term "or" is, unless indicated otherwise, non-exclusive, i.e., encompassing both "and" and "or." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Statements in which a plurality of attributes or functions are mapped to a plurality of objects (e.g., one or more processors performing steps A, B, C, and D) encompasses both all such attributes or functions being mapped to all such objects and subsets of the attributes or functions being mapped to subsets of the attributes or functions (e.g., all processors performing steps A-D, and a case in which processor 1 performs step A, processor 2 performs step B and part of step C, and processor 3 performs part of step C and step D), unless otherwise indicated. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. Limitations as to sequence of recited steps should not be read into the claims unless explicitly specified, e.g., with explicit language like "after performing X, performing Y," in contrast to statements that might be improperly argued to imply sequence limitations, like "performing X on items, performing Y on the X'ed items," used for purposes of making claims more readable rather than specifying sequence. Statements referring to "at least Z of A, B, and C," and the like (e.g., "at least Z of A, B, or C"), refer to at least Z of the listed categories (A, B, and C) and do not require at least Z units in a category. Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

Load balancing and distributing issue requests for resolution by assignable resources is described. A multimodal model determines attributes of an input issue request. A lower dimensional representation of the input issue request is generated based on the attributes; and compared to other lower dimensional representations of other issue requests to identify prior similar issue requests. The multi modal model outputs indications of similarity strength for the prior similar issue requests, and the resources assigned to resolve the prior similar issue requests. An expertise level for each assignable resource is determined based on the similarity strength and the previously assigned resources. A routing metric for each assignable resource is determined based on a combination of the expertise level and an availability of each assignable resource; and the input issue request is routed to an assignable resource in the assignable resources based on the routing metric.

The present techniques will be better understood with reference to the following enumerated embodiments:
1. A method for load balancing and distributing issue requests for resolution by assignable resources, the method comprising: determining, with a multimodal model, attributes of an input issue request, the attributes comprising entities and context associated with the input issue request; generating, with the multimodal model, a lower dimensional representation of the input issue request based on the attributes; comparing, with the multimodal model, the lower dimensional representation to other lower dimensional representations of other issue requests to identify prior similar issue requests; outputting, from the multimodal model, indications of similarity strength for the prior similar issue requests relative to the input issue request determined based on the comparing, and indications of resources assigned to resolve the prior similar issue requests; determining expertise levels for the assignable resources based on the indications of similarity strength and the indications of resources assigned to resolve the prior similar issue requests; determining routing metrics for the assignable resources based on a combination of the expertise levels and availabilities of the assignable resources; and routing the input issue request to an assignable resource in the assignable resources based on the routing metrics.
2. The method of embodiment 1, wherein the multimodal model is a large language model (LLM).
3. The method of any of the previous embodiments, wherein the LLM is a generative pre-trained transformer (GPT).
4. The method of any of the previous embodiments, wherein the LLM is trained on a historical set of issue request routing and completion data, the data comprising the other issue requests, attributes of the other issue requests, the other lower dimensional representations of the other issue requests, resources assigned to each of the other issue requests, and an indication of whether the other issue requests were successfully resolved.
5. The method of any of the previous embodiments wherein generating the lower dimensional representation comprises encoding the attributes of the input issue request into a vector that represents the lower dimensional representation.
6. The method of any of the previous embodiments, wherein the lower dimensional representation of the input issue request and the other lower dimensional representations of other issue requests comprise vectors.
7. The method of any of the previous embodiments, wherein the indications of similarity strength comprise cosine distances between vectors.
8. The method of any of the previous embodiments, wherein the entities and context comprise signals associated with the input issue request.
9. The method of any of the previous embodiments, wherein the entities comprise tokens associated with at least one of specific, identifiable items or concepts that have meaning within the input issue request.
10. The method of any of the previous embodiments, wherein the entities comprise one or more of: identification or incident numbers, a title of the input issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, and issue request creation mechanism.
11. The method of any of the previous embodiments, wherein the context comprises tokens associated with at least one of surrounding information, background, or situational factors present in the input issue request that influence generating the lower dimensional representation of the input issue request.
12. The method of any of the previous embodiments, wherein the context comprises tokens indicative of one or more of symptoms associated with the input issue request, relationships between entities in the input issue request, and hierarchical relationships associated with the input issue request.
13. The method of any of the previous embodiments, wherein determining the expertise level for each assignable resource in the assignable resources comprises determining whether the assignable resources successfully resolved the prior similar issue request.
14. The method of any of the previous embodiments, wherein the availability of each assignable resource is determined based on one or both of: a total number of issue requests assigned to each assignable resource, and a total time spent on a particular issue request by each assignable resource.
15. The method of any of the previous embodiments, wherein the input issue request comprises a ticket, the ticket comprising a structured record configured to track, manage, or document a specific issue, task, request, or interaction between a requestor and the assignable resources.
16. The method of claim 1, wherein the assignable resources comprise designated responsible individuals or teams of individuals.
17. The method of any of the previous embodiments, wherein routing the input issue request to the assignable resource in the assignable resources based on the routing metric comprises prioritizing distribution of the input issue request to a designated responsible individual or team of individuals who has already been assigned or resolved one or more prior similar issue requests, and who has sufficient availability.
18. The method of any of the previous embodiments, further comprising monitoring for a new issue request generation or new issue request transfer to a given resolution resource, and invoking the method responsive to new issue request generation or the transfer to the given resolution resource.
19. The method of any of the previous embodiments, further comprising cleaning text of the input issue request prior to attribute determination by the multimodal model, the cleaning comprising removing noise from the input issue request, the noise comprising injected input not specific to an issue associated with the input issue request or field values not useful for identifying issue similarity.
20. The method of any of the previous embodiments, further comprising providing the input issue request as training data to the multimodal model.
21. A system for load balancing and distributing issue requests for resolution by assignable resources, comprising: a processor; and memory storing instructions that, when executed by the processor, cause the system to: generate, with a multimodal model, a lower dimensional representation of an input issue request based on attributes of the input issue request, the attributes comprising entities and context associated with the input issue request; compare, with the multimodal model, the lower dimensional representation to other lower dimensional representations of other issue requests to identify prior similar issue requests; output, from the multimodal model, indications of similarity strength for the prior similar issue requests relative to the input issue request determined based on the comparing, and indications of resources assigned to resolve the prior similar issue requests; determine expertise levels for the assignable resources based on the indications of similarity strength and the indications of resources assigned to resolve the prior similar issue requests; and rout the input issue request to an assignable resource in the assignable resources based on a combination of the expertise levels and availabilities of the assignable resources.
22. The system of embodiment 21, wherein the multimodal model is a large language model (LLM).
23. The system of any of the previous embodiments, wherein the LLM is a generative pre-trained transformer (GPT).
24. The system of any of the previous embodiments, wherein the LLM is trained on a historical set of issue request routing and completion data, the data comprising the other issue requests, attributes of the other issue requests, the other lower dimensional representations of the other issue requests, resources assigned to each of the other issue requests, and an indication of whether the other issue requests were successfully resolved.
25. The system of any of the previous embodiments, wherein generating the lower dimensional representation comprises encoding the attributes of the input issue request into a vector that represents the lower dimensional representation.
26. The system of any of the previous embodiments, wherein the lower dimensional representation of the input issue request and the other lower dimensional representations of other issue requests comprise vectors.
27. The system of any of the previous embodiments, wherein the indications of similarity strength comprise cosine distances between vectors.
28. The system of any of the previous embodiments, wherein the entities and context comprise signals associated with the input issue request.
29. The system of any of the previous embodiments, wherein the entities comprise tokens associated with at least one of specific, identifiable items or concepts that have meaning within the input issue request.
30. The system of any of the previous embodiments, wherein the entities comprise one or more of: identification or incident numbers, a title of the input issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, and issue request creation mechanism.
31. The system of any of the previous embodiments, wherein the context comprises tokens associated with at least one of surrounding information, background, or situational factors present in the input issue request that influence generating the lower dimensional representation of the input issue request.
32. The system of any of the previous embodiments, wherein the context comprises tokens indicative of one or more of symptoms associated with the input issue request, relationships between entities in the input issue request, and hierarchical relationships associated with the input issue request.
33. The system of any of the previous embodiments, wherein determining the expertise level for each assignable resource in the assignable resources comprises determining whether the assignable resources successfully resolved the prior similar issue request.
34. The system of any of the previous embodiments, wherein the availability of each assignable resource is determined based on one or both of: a total number of issue requests assigned to each assignable resource, and a total time spent on a particular issue request by each assignable resource.
35. The system of any of the previous embodiments, wherein the input issue request comprises a ticket, the ticket comprising a structured record configured to track, manage, or document a specific issue, task, request, or interaction between a requestor and the assignable resources.
36. The system of any of the previous embodiments, wherein the assignable resources comprise designated responsible individuals or teams of individuals.
37. The system of any of the previous embodiments, wherein routing the input issue request to the assignable resource in the assignable resources comprises prioritizing distribution of the input issue request to a designated responsible individual or team of individuals who has already been assigned or resolved one or more prior similar issue requests, and who has sufficient availability.
38. The system of any of the previous embodiments, wherein the system is further configured to monitor for new issue request generation or new issue request transfer to a given resolution resource, and execute the instructions responsive to new issue request generation or the transfer to the given resolution resource.
39. The system of any of the previous embodiments, wherein the system is further configured to clean text of the input issue request prior to attribute determination by the multimodal model, the cleaning comprising removing noise from the input issue request, the noise comprising injected input not specific to an issue associated with the input issue request or field values not useful for identifying issue similarity.
40. The system of any of the previous embodiments, wherein the system is further configured to provide the input issue request as training data to the multimodal model.
41. A non-transitory computer readable medium having instructions thereon, the instructions, when executed by a computer, causing the computer to perform operations for load balancing and distributing issue requests for resolution by assignable resources, the operations comprising: monitoring for new input issue request generation or new issue request transfer to a given resolution resource, and invoking the operations responsive to new issue request generation or the transfer to the given resolution resource; cleaning text of an input issue request, the cleaning comprising removing noise from the input issue request, the noise comprising injected input not specific to an issue associated with the input issue request or field values not useful for identifying issue similarity; determining, with a generative pre-trained transformer (GPT), attributes of the input issue request, the attributes comprising entities and context associated with the input issue request; generating, with the GPT, a lower dimensional representation of the input issue request based on the attributes; comparing, with the GPT, the lower dimensional representation to other lower dimensional representations of other issue requests to identify prior similar issue requests; outputting, from the GPT, indications of similarity strength for each prior similar issue request relative to the input issue request determined based on the comparing, and indications of resources assigned to resolve each prior similar issue request; determining an expertise level for each assignable resource in the assignable resources based on the indications of similarity strength and the indications of resources assigned to resolve each prior similar issue request; determining a routing metric for each assignable resource based on a combination of the expertise level and an availability of each assignable resource; and routing the input issue request to an assignable resource in the assignable resources based on the routing metric.
42. The medium of embodiment 41, wherein the GPT is trained on a historical set of issue request routing and completion data, the data comprising the other issue requests, attributes of the other issue requests, the other lower dimensional representations of the other issue requests, resources assigned to each of the other issue requests, and an indication of whether the other issue requests were successfully resolved.
43. The medium of any of the previous embodiments, wherein generating the lower dimensional representation comprises encoding the attributes of the input issue request into a vector that represents the lower dimensional representation.
44. The medium of any of the previous embodiments, wherein the lower dimensional representation of the input issue request and the other lower dimensional representations of other issue requests comprise vectors.
45. The medium of any of the previous embodiments, wherein the indications of similarity strength comprise cosine distances between vectors.
46. The medium of any of the previous embodiments, wherein the entities and context comprise signals associated with the input issue request.
47. The medium of any of the previous embodiments, wherein the entities comprise tokens associated with at least one of specific, identifiable items or concepts that have meaning within the input issue request.
48. The medium of any of the previous embodiments, wherein the entities comprise one or more of: identification or incident numbers, a title of the input issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, and issue request creation mechanism.
49. The medium of any of the previous embodiments, wherein the context comprises tokens associated with at least one of surrounding information, background, or situational factors present in the input issue request that influence generating the lower dimensional representation of the input issue request.
50. The medium of any of the previous embodiments, wherein the context comprises tokens indicative of one or more of symptoms associated with the input issue request, relationships between entities in the input issue request, and hierarchical relationships associated with the input issue request.
51. The medium of any of the previous embodiments, wherein determining the expertise level for each assignable resource in the assignable resources comprises determining whether the assignable resources successfully resolved the prior similar issue request.
52. The medium of any of the previous embodiments, wherein the availability of each assignable resource is determined based on one or both of: a total number of issue requests assigned to each assignable resource, and a total time spent on a particular issue request by each assignable resource.
53. The medium of any of the previous embodiments, wherein the input issue request comprises a ticket, the ticket comprising a structured record configured to track, manage, or document a specific issue, task, request, or interaction between a requestor and the assignable resources.
54. The medium of any of the previous embodiments, wherein the assignable resources comprise designated responsible individuals or teams of individuals.
55. The medium of any of the previous embodiments, wherein routing the input issue request to the assignable resource in the assignable resources based on the routing metric comprises prioritizing distribution of the input issue request to a designated responsible individual or team of individuals who has already been assigned or resolved one or more prior similar issue requests, and who has sufficient availability.
56. The medium of any of the previous embodiments, the operations further comprising providing the input issue request as training data to the GPT.

## Claims

1. A method (500) for load balancing and distributing issue requests for resolution by assignable resources, the method comprising:
determining (502), with a multimodal model, attributes of an input issue request, the attributes comprising entities and context associated with the input issue request;
generating (504), with the multimodal model, a lower dimensional representation of the input issue request based on the attributes;
comparing (506), with the multimodal model, the lower dimensional representation to other lower dimensional representations of other issue requests to identify prior similar issue requests;
outputting (508), from the multimodal model, indications of similarity strength for the prior similar issue requests relative to the input issue request determined based on the comparing, and indications of resources assigned to resolve the prior similar issue requests;
determining (510) expertise levels for the assignable resources based on the indications of similarity strength and the indications of resources assigned to resolve the prior similar issue requests;
determining (512) routing metrics for the assignable resources based on a combination of the expertise levels and availabilities of the assignable resources; and
routing (514) the input issue request to an assignable resource in the assignable resources based on the routing metrics.

2. The method of claim 1, wherein the multimodal model is a large language model (LLM).

3. The method of claim 2, wherein the LLM is a generative pre-trained transformer (GPT), or wherein the LLM is trained on a historical set of issue request routing and completion data, the data comprising the other issue requests, attributes of the other issue requests, the other lower dimensional representations of the other issue requests, resources assigned to each of the other issue requests, and an indication of whether the other issue requests were successfully resolved.

4. The method of any of claims 1-3, wherein generating the lower dimensional representation comprises encoding the attributes of the input issue request into a vector that represents the lower dimensional representation.

5. The method of any of claims 1-4, wherein the lower dimensional representation of the input issue request and the other lower dimensional representations of other issue requests comprise vectors.

6. The method of claim 5, wherein the indications of similarity strength comprise cosine distances between vectors.

7. The method of any of claims 1-6, wherein:
the entities and context comprise signals associated with the input issue request;
the entities comprise tokens associated with at least one of specific, identifiable items or concepts that have meaning within the input issue request;
the entities comprise one or more of: identification or incident numbers, a title of the input issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, and issue request creation mechanism;
the context comprises tokens associated with at least one of surrounding information, background, or situational factors present in the input issue request that influence generating the lower dimensional representation of the input issue request; or
the context comprises tokens indicative of one or more of symptoms associated with the input issue request, relationships between entities in the input issue request, and hierarchical relationships associated with the input issue request.

8. The method of any of claims 1-7, wherein determining the expertise levels for the assignable resources comprises determining whether the assignable resources successfully resolved the prior similar issue requests.

9. The method of any of claims 1-8, wherein the availability of each assignable resource is determined based on one or both of: a total number of issue requests assigned to each assignable resource, and a total time spent on a particular issue request by each assignable resource.

10. The method of any of claims 1-9, wherein the input issue request comprises a ticket, the ticket comprising a structured record configured to track, manage, or document a specific issue, task, request, or interaction between a requestor and the assignable resources.

11. A system (100) for load balancing and distributing issue requests for resolution by assignable resources, comprising:
a processor (114); and
memory (130) storing instructions (160) that, when executed by the processor, cause the system to:
generate (504), with a multimodal model, a lower dimensional representation of an input issue request based on attributes of the input issue request, the attributes comprising entities and context associated with the input issue request;
compare (506), with the multimodal model, the lower dimensional representation to other lower dimensional representations of other issue requests to identify prior similar issue requests;
output (508), from the multimodal model, indications of similarity strength for the prior similar issue requests relative to the input issue request determined based on the comparing, and indications of resources assigned to resolve the prior similar issue requests;
determine (510) expertise levels for the assignable resources based on the indications of similarity strength and the indications of resources assigned to resolve the prior similar issue requests; and
rout (514) the input issue request to an assignable resource in the assignable resources based on a combination of the expertise levels and availabilities of the assignable resources.

12. The system of claim 11, wherein the multimodal model is a large language model (LLM) trained on a historical set of issue request routing and completion data, the data comprising the other issue requests, attributes of the other issue requests, the other lower dimensional representations of the other issue requests, resources assigned to each of the other issue requests, and an indication of whether the other issue requests were successfully resolved.

13. The system of claim 11 or 12, wherein the lower dimensional representation of the input issue request and the other lower dimensional representations of other issue requests comprise vectors, and wherein the indications of similarity strength comprise cosine distances between vectors.

14. The system of any of claims 11-13, wherein:
the entities and context comprise signals associated with the input issue request;
the entities comprise one or more of: identification or incident numbers, a title of the input issue request, an error message associated with the input issue request, an error signature associated with the input issue request, one or more locations associated with the input issue request, equipment associated with the input issue request, one or more tags associated with the input issue request, discussion context on historical incidents, prior transfer history, issue request origin, and issue request creation mechanism; and
the context comprises tokens associated with at least one of surrounding information, background, or situational factors present in the input issue request that influence generating the lower dimensional representation of the input issue request; or tokens indicative of one or more of symptoms associated with the input issue request, relationships between entities in the input issue request, and hierarchical relationships associated with the input issue request.

15. A non-transitory computer readable medium (130) having instructions (160) thereon, the instructions, when executed by a computer (112), causing the computer to perform operations for load balancing and distributing issue requests for resolution by assignable resources, the operations comprising:
monitoring (501a) for new input issue request generation or new issue request transfer to a given resolution resource, and invoking the operations responsive to new issue request generation or the transfer to the given resolution resource;
cleaning (501b) text of an input issue request, the cleaning comprising removing noise from the input issue request, the noise comprising injected input not specific to an issue associated with the input issue request or field values not useful for identifying issue similarity;
determining (502), with a generative pre-trained transformer (GPT), attributes of the input issue request, the attributes comprising entities and context associated with the input issue request;
generating (504), with the GPT, a lower dimensional representation of the input issue request based on the attributes;
comparing (506), with the GPT, the lower dimensional representation to other lower dimensional representations of other issue requests to identify prior similar issue requests;
outputting (508), from the GPT, indications of similarity strength for each prior similar issue request relative to the input issue request determined based on the comparing, and indications of resources assigned to resolve each prior similar issue request;
determining (510) an expertise level for each assignable resource in the assignable resources based on the indications of similarity strength and the indications of resources assigned to resolve each prior similar issue request;
determining (512)a routing metric for each assignable resource based on a combination of the expertise level and an availability of each assignable resource; and
routing (514) the input issue request to an assignable resource in the assignable resources based on the routing metric.
